Europäisches Patentamt

(19) European Patent Office

Office européen des brevets

(11) Publication number: **0 051 464**
**A2**

(12) **EUROPEAN PATENT APPLICATION**

(21) Application number: **81305156.2**

(22) Date of filing: **30.10.81**

(51) Int. Cl.³: **B 62 D 53/08**

(30) Priority: **04.11.80 GB 8035426**

(43) Date of publication of application:
**12.05.82 Bulletin 82/19**

(84) Designated Contracting States:
**AT BE CH DE FR GB IT LI LU NL SE**

(71) Applicant: **Harris, John**
**19 Bournelea Avenue**
**Burnage Manchester 19(GB)**

(72) Inventor: **Harris, John**
**19 Bournelea Avenue**
**Burnage Manchester 19(GB)**

(74) Representative: **Massey, Alexander et al,**
**MARKS & CLERK Scottish Life House Bridge Street**
**Manchester, M3 3DP(GB)**

(54) **Anti coupling device for semi trailer kingpin.**

(57) A trailer vehicle incorporates a coupling pin for use in connecting the trailer vehicle to a tractor. The coupling pin is pivotally mounted within a downwardly-open protective enclosure on the underside of the trailer vehicle for movement between a position in which the coupling pin lies wholly within the protective enclosure and a position in which it depends out of the protective enclosure for coupling purposes. A pivotal gate is provided partially to close the protective enclosure in either position of the coupling pin, the gate being openable during pivotal movements of the coupling pin.

FIG 2

Croydon Printing Company Ltd

EP 0 051 464 A2

2.

This invention relates to trailer vehicles.

Tractor-trailer combinations employing a fifth wheel coupling are well known. Trailers are often left parked overnight with their contents intact, the driver taking away the tractor with the intention of returning next day to couple the tractor to the trailer and continue his journey. Stealing of such parked trailers is on the increase, the thieves simply using another tractor equipped with the standard fifth wheel coupling.

It is an object of the present invention to make such stealing more difficult.

According to the present invention there is provided a trailer vehicle incorporating a coupling pin for use in connecting the trailer vehicle to a tractor, the coupling pin being pivotally mounted within a downwardly-open protective enclosure on the underside of the trailer vehicle for movement between a position in which the coupling pin lies wholly within the protective enclosure and a position in which it depends out of the protective enclosure for coupling purposes, a pivotal gate being provided partially to close the protective enclosure in either position of the coupling pin, the gate being openable during pivotal movements of the coupling pin.

An embodiment of the present invention will now be described, by way of example, with reference

3.

to the accompanying drawings, in which:

Fig. 1 is a diagrammatic plan view of a trailer incorporating the present invention;

Fig. 2 is a side elevation of the coupling pin arrangement;

Fig. 3 is a plan view corresponding to Fig. 2; and,

Fig. 4 is the electrical control circuit.

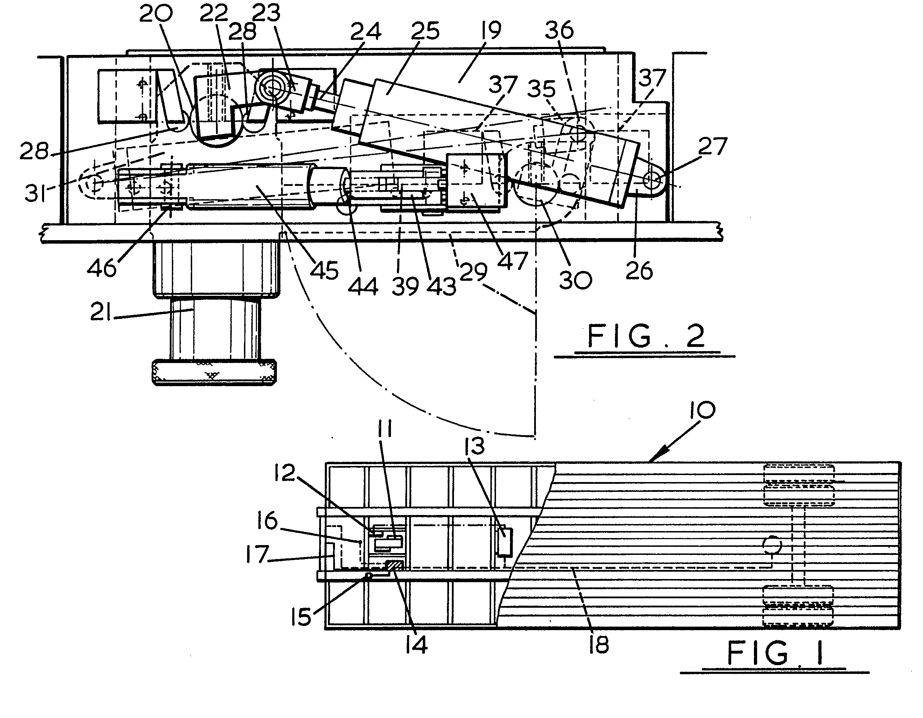

Referring to Fig. 1, the trailer vehicle 10 is provided with an automatically retractable coupling pin arrangement 11 operated by a pneumatic logic control unit 12 connected to a compressed air reservoir 13. An electrical control unit 14 for the pneumatic control unit 12 is actuable by a security keyswitch 15. Operatively associated with the electrical control unit 14 is a proximity switch 16 which/the presence or not of a tractor (not shown). indicates The electrical control unit 14 contains its own battery for powering same as will be described later and the trailer 10 is provided with a 24 volt electrical connection 17 connected to the electrical control unit 14 and into which the tractor connects for a purpose to be later described. Finally, an emergency compressed air line 18 connected to the reservoir 13 is provided.

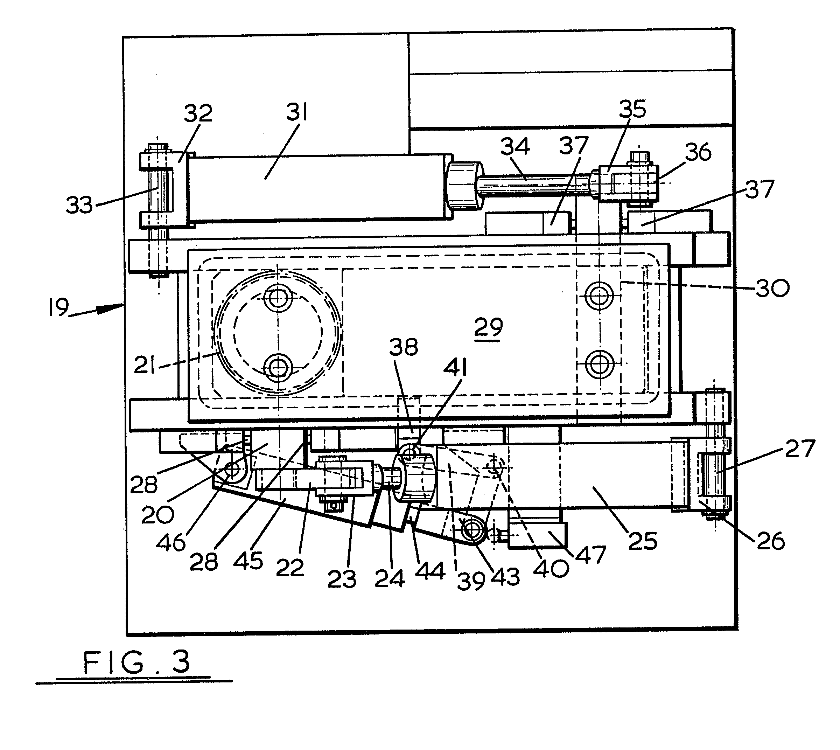

Reference is now made to Figs. 2 and 3 of the drawings. The coupling pin arrangement 11 comprises a steel box housing 19 rigidly fixed to the underside

4.

of the trailer 10, a horizonta' rotatable spindle 20 extending across the interior of the box housing 19 at one end and the coupling pin 21 being fast with this spindle 20 s%that the coupling pin 21 can be moved between a horizontal inoperative position within the box housing 19 and a vertical operative position depending out of the box housing 19. A cranked lever 22 is fast with one end of the spindle 20 and is connected within a clevis 23 at the end of the piston rod 24 of a double-acting pneumatic ram 25 connected also by a clevis 26 pivotal on a pin 27 secured to the box housing 19. Roller lever control valves 28 operable by half cams (not shown) on the spindle 20 are provided for a purpose to be later described.

The box housing 19 is open at the bottom and can be partially closed oy a gate 29 carried by a rotatable spindle 30 extending across the box housing 19. This spindle 30 is rotatable by a pneumatic ram 31 pivoted at one end by a clevis 32 to a pin 33 secured to the box housing 19, the piston 34 of the ram 31 being secured oy a clevis 35 to one end of a lever 36 connected to the spindle 30. Here again roller lever control valves 37 operable by half cams (not shown) on the spindle 30 are provided for a purpose to be later described.

It will be noted from Fig. 2 that with the coupling pin 21 depending and the gate 29

5.

in the horizontal position (i.e. closed) the edge of the gate 29 butts against the coupling pin 21.

A lock is provided to secure the gate 29 in closed horizontal position. This comprises a slidable locking pin 38 which engages into the side of the gate 29 and which is movable into-and-out of locking position by a bellcrank lever 39 pivoted onto the box housing at 40 and connected at 41 to the locking pin 38 and at 42 to a clevis 43 on the end of a piston rod 44 of a pneumatic ram 45 pivotally secured to the box housing 19 as indicated at 46. A plunger-type control valve 47 operable by the piston rod 44 is fitted to the side of the box housing 19 for a purpose to be later described.

The sequential functioning of the pneumatic rams 25, 31 and 45 and the roller lever control valves 28 and 37 and the plunger-type control valve 47 is by means of a pneumatic logic/control circuit of the kind well known to those skilled in the art.

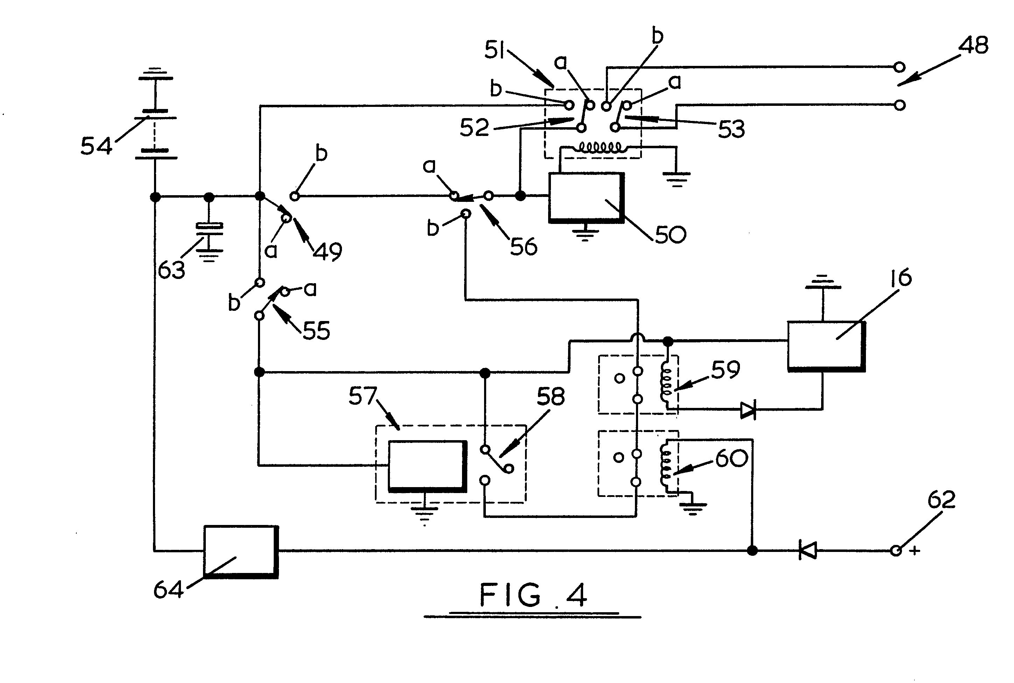

Let us assume that the trailer vehicle 10 is parked with the tractor unhitched so that the coupling pin 21 is lying horizontal within the box casing 19 which is partially closed by the gate 29 which, in turn, is locked in horizontal position by the locking pin 38. The driver wishes to hitch the tractor to the trailer vehicle 10 so he operates the security keyswitch 15 by means of his key which energises a solenoid-operated valve generally indicated at 48 (Fig. 4) to place the compressed air reservoir 13 in

6.

communication with the various rams and valves under the control of the pneumatic logic control circuitry and the sequence of events is as follows:-

(a) pneumatic ram 45 is powered to withdraw locking pin 38 from the gate 29 and this action causes the piston rod 44 to operate the plunger-type control valve 47;

(b) compressed air then flows _via_ control valve 47 to pneumatic ram 31 to power same and cause it to rotate the spindle 30 to pivot the gate 29 downwards, the half cams (not shown) associated with this spindle at the same time operating the roller lever control valves 37;

(c) these control valves 37 now permit flow of compressed air to the pneumatic ram 25 which rotates spindle 20 to pivot the coupling pin 21 downwards to a vertical position while at the same time operating roller lever control valves 28;

(d) this latter action sequentially exhausts air from pneumatic rams 31 and 45 causing, first, the gate 29 to be pivoted back to its horizontal position and, second, the locking pin 29 to be reinserted into the gate 29.

This sequence is reversed when it is desired to move the coupling pin 21 to its stowed position within the box casing 19.

7.

While the coupling pin 21 is pivotal in nature it will be manifest that in its coupling position it is mechanically locked by the abutting gate 29 which, in turn, is mechanically locked by the locking pin 29. This mechanical locking ensures that the coupling pin 21 will not pivot while the trailer vehicle 10 is being towed by a tractor, and, of course, the securement of the coupling pin 21 within the fifth wheel coupling of the tractor increases this resistance to unwanted pivoting of the coupling pin 21.

Fig. 4 shows the electrical control circuit which controls the solenoid-operated valve 48 of the pneumatic logic control circuitry.

With the electrical circuitry as shown in Fig. 4, the tractor is detached from the trailer vehicle and the pin coupling 21 is in its stowed position.

To effect the sequence of operations detailed above, the driver operates the keyswitch 49 from position a to position b. As a result circuit 50 is operated and after a two second delay it applies a ten second pulse to the coil of relay 51 which causes contacts 52 and 53 to switch from position a to position b for ten seconds. This energises solenoid-operated valve 48 and the aforesaid sequence commences. Contacts 52 and 53 short circuit the keyswitch 49 and ensure that power from battery 54

8.

is supplied to circuit 50 when the driver removes his key from the keyswitch 49.

As the coupling pin 21 moves downwards it causes switches 55 and 56 to switch from position a to position b.

Once switch 55 is switched to position b power is supplied to a three minute timing circuit 57 which after 3 minutes closes a switch 58. The latter is connected in series with the battery 54 and circuit 50 through the contacts of relays 59 and 60 and through the position b contacts of the switch 56.

In the event that the tractor is not coupled to the trailer vehicle 10 with three minutes of circuit 57 being activated, and opening of the contacts of relays 59 and 60, as hereinafter described, power is again supplied to the circuit 50 causing the ten second pulse to be applied to relay 53 to energise solenoid-operated valve 48 to cause the pneumatic logic control circuitry to effect the reverse of the aforesaid sequence so that the coupling pin 21 is returned to its stowed position.

If, however, coupling is effected within the three minute delay then the proximity switch 16 is operated and opens the contacts of relay 59 disconnecting the switch 58 from circuit 50 and so preventing operation of the solenoid valve 48 and stowing of the coupling pin 21. As a safety feature when the tractor is coupled to the trailer vehicle the 24 volt electrical connection is made

9.

through terminal 62 to relay 60 opening the latter's contacts and ensuring that power is not supplied to circuit 50 when tractor and trailer vehicle are coupled together.

Disconnection of the tractor from the trailer vehicle 10 causes the proximity switch 16 to signal that power is to be supplied to circuit 50 so that the coupling pin automatically moves to its stowed position.

In the circuit of Fig. 4, 63 is a smoothing capacitor and 64 a 12 volt regulator.

The pneumatic logic control circuitry may be expanded to control the pneumatic operation of the trailer vehicle internal door locking system disclosed in my copending Patent Application No. 80 19690 filed 17th June 1980.

10.

CLAIMS:

1. A trailer vehicle incorporating a coupling pin for use in connecting the trailer vehicle to a tractor, the coupling pin being pivotally mounted within a downwardly-open protective enclosure on the underside of the trailer vehicle for movement between a position in which the coupling pin lies wholly within the protective enclosure and a position in which it depends out of the protective enclosure for coupling purposes, a pivotal gate being provided partially to close the protective enclosure in either position of the coupling pin, the gate being openable during pivotal movements of the coupling pin.

2. A trailer vehicle as claimed in claim 1, in which a releasable mechanical lock is provided to secure the gate in closed position.

3. A trailer vehicle as claimed in claim 2 in which the movements of the coupling pin, gate and mechanical lock are controlled by pneumatic logic control circuitry.

4. A trailer vehicle as claimed in claim 3 in which the coupling pin is carried by a rotatable spindle operated by a pneumatic ram, which spindle serves to actuate control valve means of the pneumatic circuitry to effect gate operation to close.

5. A trailer vehicle as claimed in claim 3 or 4, in which the gate is carried by a rotatable spindle

11.

operated by a pneumatic ram, which spindle serves to actuate control valve means to effect coupling pin operation to the coupling position or locking pin operation to locked position.

6. A trailer vehicle as claimed in any one of claims 3 to 5 in which the locking pin is operated by a pneumatic ram _via_ a bellcrank lever, the ram also serving to operate control valve means adapted to initiate gate opening.

7. A trailer vehicle as claimed in any one of claims 3 to 6, in which the pneumatic logic/circuitry control is controlled by an electrical control circuit operable either by a security keyswitch or a proximity switch.

8. A trailer vehicle as claimed in claim 7, in which the electrical control circuit incorporates a time delay within which a tractor must be coupled to the trailer vehicle otherwise the coupling pin is automatically returned to its stowed position.

9. A trailer vehicle, substantially as hereinbefore described with reference to the accompanying drawings.

FIG. 2

FIG. 1

FIG. 3

FIG .4

0051464